# EUROPEAN PATENT SPECIFICATION

(11) **EP 2 331 718 B1**
(45) Date of publication and mention of the grant of the patent: **22.04.2015**
(21) Application number: 09776307.2
(22) Date of filing: 27.08.2009
(51) Int. Cl.: C22B 7/04, C22B 21/00, C22B 9/18

(54) **ELECTROSLAG MELTING METHOD FOR REPROCESSING OF ALUMINIUM SLAG**
ELEKTROSCHLACKESCHMELZVERFAHREN ZUR WIEDERVERARBEITUNG VON ALUMINIUMSCHLACKE
PROCÉDÉ DE FUSION SOUS LAITIER ÉLECTROCONDUCTEUR POUR LE RETRAITEMENT DE LAITIER D'ALUMINIUM

(30) Priority: 28.08.2008 EE 200800056
(43) Date of publication of application: 15.06.2011
(73) Proprietor: Kutuzov, Mihhail, 13812 Tallin (EE)
(72) Inventor: Kutuzov, Mihhail, 13812 Tallin (EE)
(74) Representative: Hano, Christian
(86) International application number: PCT/EE2009/000013
(87) International publication number: WO 2010/022742

(56) References cited:
- CN-A- 101 055 083
- GB-A- 557 262
- JP-A- 57 171 636
- RU-C- 2 031 165
- RU-C- 2 240 364
- RU-C2- 2 179 591
- UA-U- 22 677

## Description

### Technical field

The invention relates to the field of reprocessing of non-ferrous waste, in particular to a method for reprocessing of aluminium slag with the purpose of extraction of metallic aluminium or aluminium alloys from the slag. The invention can be used in the aluminium industry.

### Background art

Today, the method for reprocessing of aluminium slag (i.e. mechanical mixture of aluminium oxide (Al₂O₃, alumina) and metallic aluminium and other components) in rotor or drum-type open-flame furnaces using metal chlorides and fluorides such as sodium chloride (NaCl), potassium chloride (KCl), cryolite (Na₃AlF₆) and other salts is well known. This method for reprocessing of aluminium slag allows to receive the metallic aluminium with the extraction percentage of not more, than 90-95%, and also the secondary waste containing NaCl, KC1, Al₂O₃, small amount of other salts, and 5-10% of metalic aluminium in the form of inclusions. Today this method is practically the only method widely used for reprocessing of aluminium-slag.

Thus, in the art, the high-performance methods for waste-free reprocessing of aluminium slag with complete separation of the metallic fraction, from the alumina (Al₂O₃) and other non-metallic inclusions are not known.

In particular, the method for reprocessing of aluminium slag disclosed in the patent RU 2179591 (inventors Jolnin A. G. and Novichkov C. B., Int. Cl. C22B 7/04, 21/00; publication date 20.02.2002) is known. The known method includes the charging of the flux and the aluminium slag to be reprocessed into the furnace, their heating and melting, the extraction of metal and secondary slag from the received melt, and the discharging thereof. The reprocessing of aluminium slag in accordance with the known method is being realized in the rotor open-flame reverbatory furnace using the mixtures containing alkali metal chlorides such as NaCl and KCl, and cryolite (Na₃AlF₆)

The deficiencies of the known method are as follows:
1. Incomplete extraction of aluminium from the aluminium slag. The method allows to extract not more, than 95% of metalic aluminium or aluminium alloys. Thus an average of 5-10% of metal aluminium remains in the secondary waste in form of salt slag.
2. The necessity of expensive environmental protection measures. This is due to the large quantity of waste gases forming at the reprocessing of aluminium slag using the known method, which demands the high-powered gas-cleaning plant. Besides, for the environmentally harmful waste (salt slag) disposal it is needed to assign the large territories with the specific measures of protection against the ingress of salts into subterranean waters. The existing methods for complete reprocessing of the environmentally harmful salt slag are very expensive and therefore rarely used.
3. The economic inefficiency of the known method for reprocessing of aluminium slag with metallic fraction content below 25%. Accordingly, such aluminium slag is practically being not reprocessed at present time.

GB 557,262 refers to an electric furnace and a process for the melting and/or heating of aluminium and its alloys and for the recovery of aluminium dross residues, wherein the metal is submitted to the heating_effects of an alternating current passing through a fused mixture of salts as a resistor electrolyte.

The object of the present invention is to eliminate the above-mentioned deficiencies and to create a new high-performance, environmentally acceptable method of reprocessing of aluminium slag, in particular the method, which would guarantee the high level of extraction of metallic component. At the same time it is preferable that the new method would provide the possibility of reuse of the obtained secondary slag, e.g. alumina (Al₂O₃) or its mixture with the cryolite in the production of the primary aluminium.

### Summary of the invention

The object of the invention is achieved by the method for the reprocessing of aluminium slag, which includes the steps of charging of cryolite (Na₃AlF₆) or mixture thereof with the alumina (Al₂O₃), optionally with other components, and charging of aluminium slag to be reprocessed into the furnace, heating and melting thereof, extraction of metal aluminium or aluminium alloy and the secondary slag from the received melt, and discharging thereof from the furnace, which method, according to the present invention, is characterized in that the reprocessing of aluminium slag is being conducted in the direct current electro-slag furnace containing a crucible with the bottom electrode as a cathode and the top electrode as an anode; and the aluminium slag is being charged in the crucible into the melted cryolite or mixture thereof with alumina and other optional components, with following melting and dissolving thereof, and then the charging of the additional aluminium slag and cryolite by portions, and the melting and dissolving thereof are carried out, wherein during the melting process the extraction of liquid metal aluminium or aluminium alloy occurs in the area of cathode, and the extraction of liquid secondary slag occurs in the area of anode. After the segregation of aluminium and the secondary slag, the discharging of the metal and the secondary slag is being done.

In the process of reprocessing of aluminium slag in the above-described direct current electro-slag furnace, the anode is being inserted into the cryolite or mixture thereof with alumina and other components until the anode completely contacts with the cathode, then the melting of the mixture occurs and the electrolyte is being formed. After that the aluminium slag and cryolite are being charged portion-wise into the electrolyte, with following melting and dissolution. The segregation of the obtained melt into metallic fraction and non-metallic fraction occurs due to the gravitation force and also due to the electromagnetic force, arising at the passage of current through the electrolyte. This determines the efficiency of the described process.

To achieve the object of the present invention the direct current electro-slag furnace is used, in particular the electro-slag furnace with the following parameters can be chosen:
- capacity - 900 kWt;
- voltage applied to the electrodes - 15-75 V;
- volume of the crucible - 0,5 m³.

The crucible in the electro-slag furnace is made from the material, which is resistant to cryolite at high temperature, and has a bottom electrode used as a cathode and a top electrode used as anode.

The tests of the method according to the present invention have been carried out and the following results were obtained:
1. The metal obtained by the method of reprocessing of aluminium slag contains, besides the aluminium, the following chemical components at the minor content, mass%:
   iron - 0,45;
   silicon - 0,3;
   oxygen - less than 0,05;
   other components - in total not more than 0,15, each not more than 0,03.
   The chemical content of components in the composition of the metal obtained corresponded to the chemical content of composition of the initial aluminium, which was melted with the receiving of the aluminium slag used for the reprocessing.
2. Also by the method of the reprocessing of the aluminium slag the secondary slag was received with the following content of chemical components, mass%:
   alumina (Al₂O₃) - 80,0;
   cryolite (Na₃AlF₆) - 19,0;
   SiO₂ - 0,2;
   other components - up to 0,3;
   content of metallic aluminium in the secondary slang - not more than 0,5.

Initially the aluminium slag to be reprocessed contained 40-45% of metallic aluminium.

These results permit to conclude that practically complete segregation of the metallic fraction and the so-called non-metallic fraction takes place, and conform the effectiveness of the method according to the invention.

On the basis of series of experiments of the method the technological parameters and the order of performing of the process of melt have been developed. The results of the experiments displayed the following advantages of the method according to the present invention:
- This method permits to achieve the extraction of not less than 99% of metallic aluminium from aluminium slag. This increases the cost-efficiency and the environmental acceptability of the method for reprocessing of aluminium slag.
- This method permits to reuse the received secondary slag (mixture of cryolite and alumina) in the electrolyzer for production of aluminium from alumina via electrolysis. This permits to reduce the environmental pollution and increase the cost-efficiency of reprocessing of aluminium slag, due to nearly waste-fiee production (since the waste disposal stage is thereat excluded).

The results of the experiments showed that the combination of the features of the method according to present invention, described in the Claim 1, ensures the creation of a new high-performance and waste-free technology, namely the method for reprocessing of aluminium slag, allowing to increase significantly the extraction of metal aluminium, to not less than 99%, and to reduce the environmental pollution. Hereby, the present invention provides the achievement of the object of the invention.

Preferably, in the method, according to the present invention, the melting and dissolution of aluminium slag in the electrolyte melt is going at the temperature in the range from 800 to 2000 °C.

### Brief description of the drawing

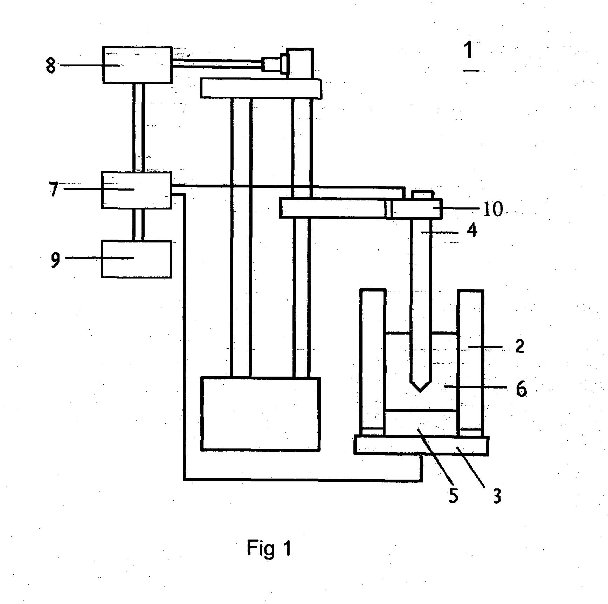

The method according to the invention is being illustrated in detail by the following description of the example of the embodiment of the invention with the reference to the Fig. 1.

The Fig. 1 represents the operation scheme of the direct current electro-slag furnace used for reprocessing of the aluminium slag by the method according to the present invention

### Example of the embodiment of the invention

The direct current electro-slag furnace 1 (Fig. 1) used in the method according to the present invention, contains the crucible 2, which has the bottom electrode, namely cathode 3, and the removable top electrode, namely anode 4. The crucible 2 is made of material, which is resistant to the cryolite at high temperature (800-2000 °C). The Fig. 1 shows the liquid aluminium 5, extracted fiom the slag during the reprocessing in the bottom part of the crucible 2, near cathode 3, and the liquid secondary slag 6, gathering near anode 4 in the top part of the crucible 2. The furnace 1 has the power supply 7, the control panel 8, the processing and registration system 9 and the anode drive 10. The electrical potential is supplied from the power supply 7 to the electrodes, particularly to the bottom electrode, cathode 3, is supplied the negative potential (-) and to the anode 4, accordingly, is supplied the positive potential (+).

The method for reprocessing of aluminium slag with using the above described electro-slag furnace is being realized as follows.

The necessary quantity (10-20% of the full-charge) of mixture of cryolite (Na₃AlF₆) and of alumina (Al₂O₃) (further "mixture") is being charged into the crucible 2. Normally then components of this mixture are taken in ratio of 18% Al₂O₃ and 82% Na₃AlF6 (also other concentrations and the use of other components and additions are possible). After the charging of the initial portion of the mixture, the top electrode, anode 4, is being submerges by drive 10 into the crucible 2 until it completely contacts with cathode 3. Therefore the electric arc occurs causing the melting of mixture, and the liquid electrolyte is being formed; further the process of melting is being conducted in the regular mode without the electric arc. After the complete melting and dissolution of the initial portion of mixture, the consecutive charging by portions of crushed aluminium slag (i.e. mechanical mixture of metal aluminium and Al₂O₃) and of cryolite and optionally other components is being realized.

The furnace is being set into the automatic mode of operation, in which the power level necessary for the melting is maintained. As the aluminium slag melts and dissolves in the electrolyte the additional charging of aluminium slag is being made, and if necessary the cryolite is being added. During the melting the liquid metal, in particular aluminium, is being extracted in the area of the bottom electrode, cathode 3, and the secondary slag 6 in form of liquid electrolyte (Al₂O₃ and cryolite) is being extracted in the area of anode 4. During the reprocessing of aluminium slag the melting temperature in the crucible is being maintained in the range from 800 to 2000 °C. At the higher temperatures the cryolite consumption is lower, but the electric power consumption is higher due to the heat loss. The melting temperature and the capacity of the furnace are chosen depending on the type of aluminium slag and the specific conditions. The charging of the components is being made until the filling of the whole crucible with the melt.

After the complete segregation of metal and secondary slag, the electro-slag furnace is being switched off. The received melt of metal and secondary slag is either being cooled in the natural way up to crystallization and is being discharged cooled, or the electrolyte (secondary slag) is being pumped out from the top part of the crucible using the vacuum ladle for slag, and the liquid metal is being pumped out from the bottom part of the crucible using the vacuum ladle for aluminium.

Herewith there is no need to pump out the electrolyte completely. It is possible to leave 10-15% of the full charge in the crucible, turn the furnace on and continue the melting process with the consecutive portion-wise charging of the aluminium slag and cryolite, as it was described above. In this case the process is practically continuous and more efficient.

Aluminium (metal) and aluminium alloy received as a result of reprocessing of the slag can be used in the production of aluminium alloys, wherein the metal is being charged into the direct current electro-slag furnace where the further preparation of the necessary alloy is going on.

The secondary slag (mixture of cryolite and Al₂O₃) received during the reprocessing of the aluminium slag by the method according to the present invention is being fed into the electrolytic cells for the secondary reprocessing for production of aluminium from alumina and cryolite via electrolysis. Thus the method according to the invention allows to receive the standard aluminium for the production of aluminium alloys, and also the secondary product in form of mixture of alumina and cryolite, that is being used as a raw material for the production of aluminium in the electrolytic cells.

The method for reprocessing of aluminium slag according to the present invention allows to perform efficiently the reprocessing of aluminium slags without the generation of environmentally harmful waste. The metallic aluminium and the aluminium alloy received during the reprocessing of slag in the direct current electro-slag furnace can be used for the production of aluminium alloys, and the secondary slag in form of mixture of cryolite and alumina can also be used as a raw material for the production of the primary aluminium by electrolysis at the primary aluminium production plants.

The method according to the invention is easy and comfortable to use on an industrial scale. Due to the high rate of recovery of aluminium or aluminium alloy in combination with high economic indexes, the method permits to reduce the environmental pollution. All this as a whole guarantees the creation of the new high-performance and practically waste-free technology of reprocessing of aluminium slag. The method according to the present invention can be realized on the base of the materials used nowadays.

The possible embodiments of the present invention are not restricted to the above-mentioned examples. Other versions of embodiment are also possible within the scope of the Claims.

## Claims

1. Method for reprocessing of aluminium slag, including the following steps: charging of cryolite or mixture thereof with alumina and other optional components, and charging of aluminium slag into the furnace, heating and melting thereof, extraction of metal aluminium or aluminium alloy and secondary slag from the melt, and discharging thereof, **characterized in that** the reprocessing of aluminium slag is being conducted in the direct current electro-slag furnace having a crucible with the bottom electrode as a cathode and the top electrode as an anode, and the aluminium slag is being charged in the crucible into the melted cryolite or mixture thereof with alumina and other optional components, with the following melting and dissolution, and then the charging of the additional aluminium slag and cryolite by portions and the melting and dissolving thereof are carried out, wherein the extraction of liquid metal aluminium or aluminium alloy occurs in the area of the cathode, and the extraction of liquid secondary slag occurs in the area of the anode.

2. Method according to claim 1, **characterized in that** the melting and dissolution of the aluminium slag is carried out at a temperature in the range from 800 to 2000 °C

## Patentansprüche

1. Verfahren zur Wiederverarbeitung von Aluminiumschlacke, das folgende Stufen umfasst:
Aufgabe von Kryolith oder einem Gemisch davon mit Tonerde und weiteren ggf. verwendeten Komponenten, Beschickung des Ofens mit Aluminiumschlacke, Erwärmung und Schmelzen derselben, Gewinnung von metallischem Aluminium oder einer Aluminiumlegierung und einer sekundären Schlacke aus der Schmelze und Austrag derselben, **dadurch gekennzeichnet, dass** die Wiederverarbeitung der Aluminiumschlacke in einem Gleichstrom-Elektroschlackeofen durchgeführt wird, der einen Tiegel mit einer unteren Elektrode als Katode und einer oberen Elektrode als Anode aufweist, wobei die Aluminiumschlacke im Tiegel in den geschmolzenen Kryolith bzw. das Gemisch daraus mit Tonerde und ggf. weiteren Komponenten gegeben wird, unter nachfolgendem Schmelzen und Lösen, portionsweise durchgeführter Beschickung mit der zusätzlichen Aluminiumschlacke und mit Kryolith, Schmelzen und Lösen derselben, wobei die Gewinnung des flüssigen Aluminiummetalls bzw. der Aluminiumlegierung im Bereich der Katode erfolgt und die Gewinnung der flüssigen sekundären Schlacke im Bereich der Anode erfolgt.

2. Verfahren nach Anspruch 1, **dadurch gekennzeichnet, dass** das Schmelzen und Lösen der Aluminiumschlacke bei einer Temperatur im Bereich von 800 - 2000 °C durchgeführt wird.

## Revendications

1. Procédé de retraitement de laitier d'aluminium, comprenant les étapes suivantes : chargement de cryolite ou d'un mélange de celle-ci avec de l'alumine et d'autres composants facultatifs, et chargement du laitier d'aluminium dans le four, chauffage et mélange correspondant, extraction de l'aluminium métallique ou de l'alliage d'aluminium et du laitier secondaire provenant de la matière fondue, et déchargement correspondant, **caractérisé en ce que** le retraitement de laitier d'aluminium est réalisé dans le four à électrolaitier à courant continu ayant un creuset avec l'électrode inférieure en tant que cathode et l'électrode supérieure en tant qu'anode, et le laitier d'aluminium est chargé à l'intérieur du creuset dans la cryolite fondue ou un mélange de celle-ci avec l'alumine et d'autres composants facultatifs, avec la fusion et la dissolution qui suivent, et ensuite le chargement du laitier d'aluminium supplémentaire et de la cryolite par portions et leur fusion et leur dissolution sont réalisées, l'extraction de l'aluminium métallique liquide ou de l'alliage d'aluminium se produisant dans la zone de la cathode, et l'extraction du laitier secondaire liquide se produisant dans la zone de l'anode.

2. Procédé selon la revendication 1, **caractérisé en ce que** la fusion et la dissolution du laitier d'aluminium sont réalisées à une température dans la plage allant de 800 à 2000°C.
